# EUROPEAN PATENT SPECIFICATION

(11) **EP 0 808 689 B1**
(45) Date of publication and mention of the grant of the patent: **23.01.2002**
(21) Application number: 97830075.4
(22) Date of filing: 24.02.1997
(51) Int. Cl.: B23Q 7/04

(54) **Device for stepwise feeding panels**
Vorrichtung für den schrittweisen Vorschub von Platten
Dispositif pour l'avancement pas à pas des panneaux

(30) Priority: 21.05.1996 IT MI961023
(43) Date of publication of application: 26.11.1997
(73) Proprietor: Alberti Vittorio S.p.A., 20063 Cernusco sul Naviglio, Milano (IT)
(72) Inventor: Alberti, Luigi c/o Alberti Vittorio S.P.A., 20063 Cernusco sul Naviglio (IT)
(74) Representative: Cicogna, Franco

(56) References cited:
- DE-C- 898 984
- GB-A- 2 102 368

## Description

### BACKGROUND OF THE INVENTION

The present invention relates to a device for stepwise feeding panels, in particular for multiple machining operation manufacturing machines.

In the wood or like material panel processing machine field are already known multiple machining operation manufacturing machines, i.e. machines provided with multiple spindle heads and/or multiple tools adapted to perform, either simultaneously or sequentially, a plurality of machining operations, such as, for example, milling, drilling operations and/or adapted to drive auxiliary tools for pinning and/or glueing that portion of a panel being processed which is arranged at a machining or working station of the machine in which the provided tools operate.

A great problem of these prior panel processing machines is that of accurately and firmly arrange the panel to be machined at a set working station.

This accuracy and stability, in particular, must be provided in combination with a high feeding speed of the panel in order to fully exploit the making characteristics of these machines.

Prior devices for feeding and properly arranging panels to be processed on the above mentioned machines, have not been found to be completely satisfactory, in particular since these prior devices do not provide a firm gripping of the panel being processed during the machining thereof.

The document DE-898 984 discloses a device for stepwise feeding panels substantially according to the preamble of the main claim.

### SUMMARY OF THE INVENTION

Accordingly, the aim of the present invention is to overcome the above mentioned problems, by providing a device for stepwise feeding panels, in particular for multiple machining operation manufacturing machines, which allows a very good precision in locating the panels being processed, with such a rate allowing to obtain very good yield results for these machines.

Within the scope of the above mentioned aim, a main object of the present invention is to provide such a feeding device which can be applied to a broad range of panel machining or processing machines.

Another object of the present invention is to provide such a panel feeding device which is very reliable and safe in operation.

According to the present invention, the above mentioned aim and objects, as well as yet other objects, which will become more apparent hereinafter, are achieved by a device for stepwise feeding panels as claimed in claim 1.

### BRIEF DESCRIPTION OF THE DRAWINGS

Further characteristics and advantages of an embodiment of the present invention will become more apparent from the following disclosure of a preferred, though not exclusive, embodiment of said device, which is illustrated, by way of an indicative, but not limitative, example in the figures of the accompanying drawings, where:
Figure 1 schematically illustrates the device according to the present invention as applied to a manufacturing machine, as seen in side elevation view;
Figure 2 is a front and partially cross-sectioned view illustrating a manufacturing machine including the panel feeding device according to the present invention;
Figure 3 is a further partially cross-sectioned view illustrating an enlarged detail of figure 2;
Figure 4 illustrates an enlarged detail of figure 1;
Figure 5 illustrates an enlarged detail of figure 1; and
Figures 6 and 7 are schematic views illustrating two modified embodiments of the panel feeding device according to the present invention.

### DESCRIPTION OF THE PREFERRED EMBODIMENTS

With reference to the number references of the above mentioned figures, the panel feeding device according to the present invention, which has been generally indicated by the reference number 1, comprises a horizontal panel bearing or supporting surface 2, for supporting panel elements 3 to be processed by a multifunctional manufacturing machine, generally indicated by the reference number 4 and equipped with the subject device 1.

The panel supporting surface 2, in particular, is defined by a plurality of chains 5 which are arranged in a mutually adjoining horizontal relationship and which are parallel to the feeding direction of the panel 3, as indicated by the arrow 6.

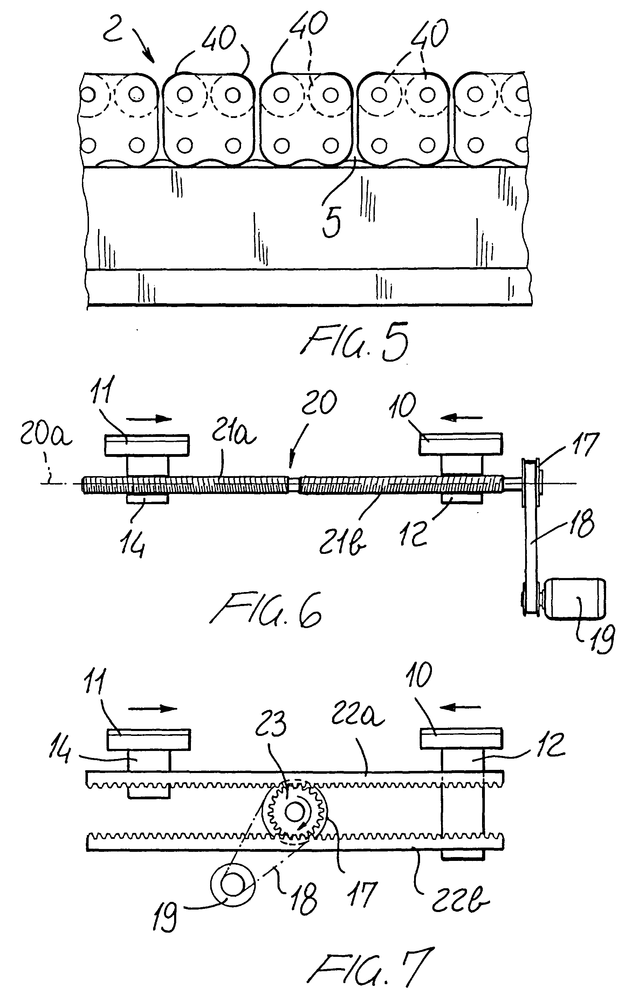

The chains 5 support, on the top thereof, a plurality of rollers 40, as is clearly shown in figure 5, on which the panels 3 are arranged.

The number of the mentioned chains 5 and the mutual spacing thereof will depend on the width of the panels 3 being processed.

In particular, the panel supporting surface 2 can be formed into two portions, respectively a first portion 7 arranged upstream of a processing station 8 of the machine 4 and a second portion 9 arranged downstream of said processing station 8, according to the panel 3 feeding or driving movement along the displacement or driving direction 6 thereof.

The panel feeding device according to the invention comprises moreover a pair of gripping means, which can be controllably engaged with a panel 3 arranged on the panel supporting surface 2.

The panel gripping means, in particular, can be controllably driven with a reciprocating motion along the driving direction 6 and with mutually coordinated displacements in order to cause the panel to be fed step by step along the driving direction 6.

The gripping means comprise, in particular, a pair of grippers 10 and 11 which can be controllably engaged with or disengaged from, for example by hydraulic or pneumatic actuators 41, or by mechanical or any other types of suitable actuators, not specifically shown, the top surface and the bottom surface of a panel 3 supported by the panel supporting surface 2.

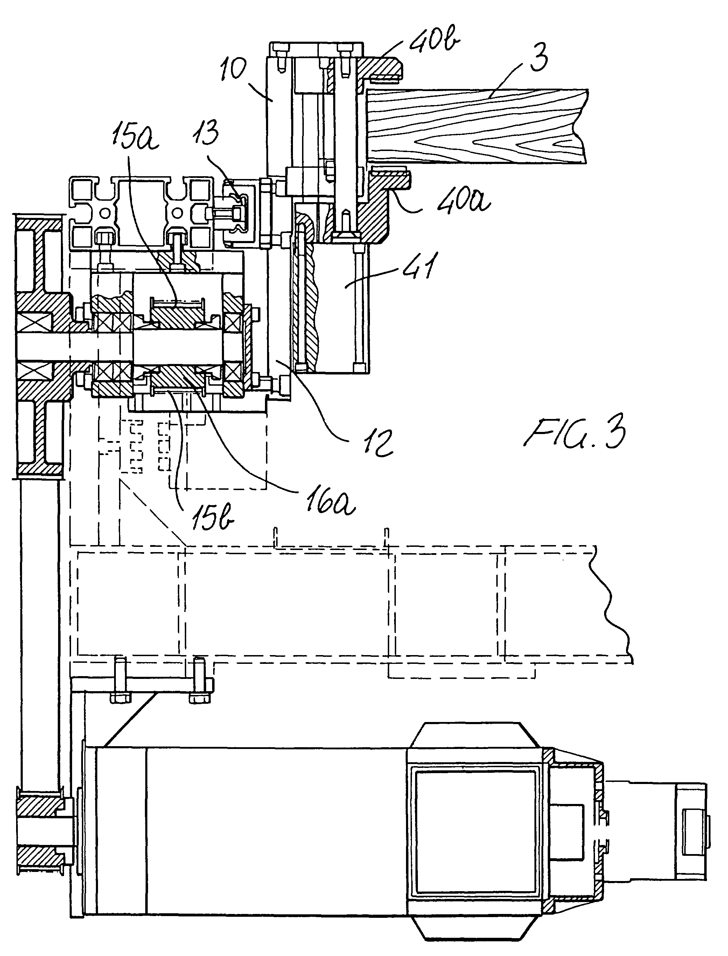

More specifically, as shown in particular in figure 3, each gripper 10, 11 comprises two self-centering arms 40a and 40b which can driven toward or away from the fixed arm, under the control of a hydraulic or pneumatic cylinder 41.

The gripper 10 is mounted on a carriage 12 which is slidably supported, in parallel to the driving direction 6, by a guide 13, in turn, is horizontally arranged parallel to said driving direction 6.

The gripper 11 too is mounted on a carriage 14, which can slide along that same guide 13.

The carriages 12 and 14 are driven by driving means adapted to displace said carriages along said guide 13 in opposite driving directions.

Moreover, the grippers 10 and 11 are alternately caused to engage with the panel 3 as it will become more apparent hereinafter.

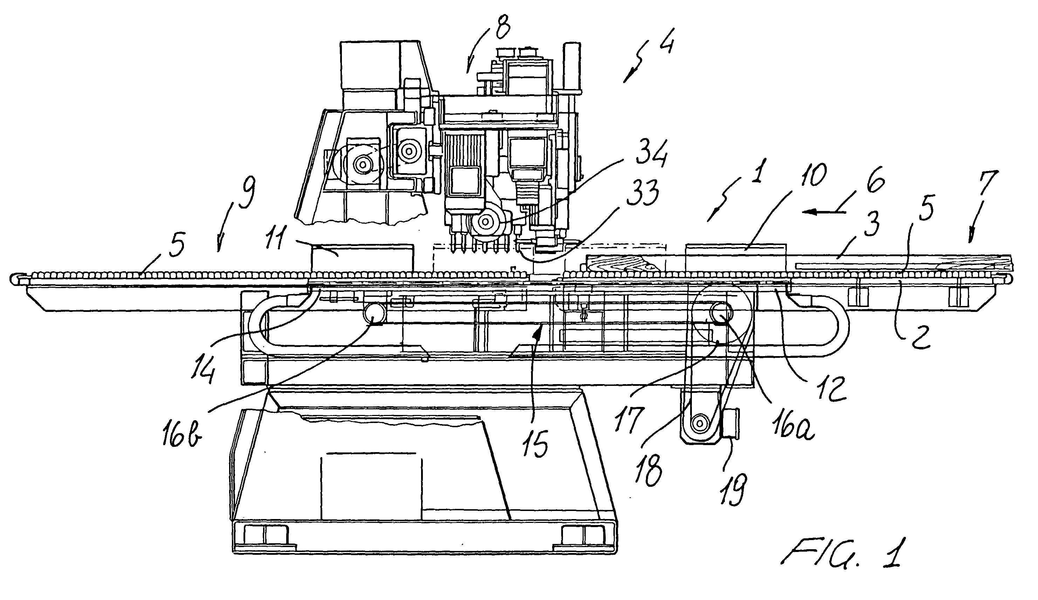

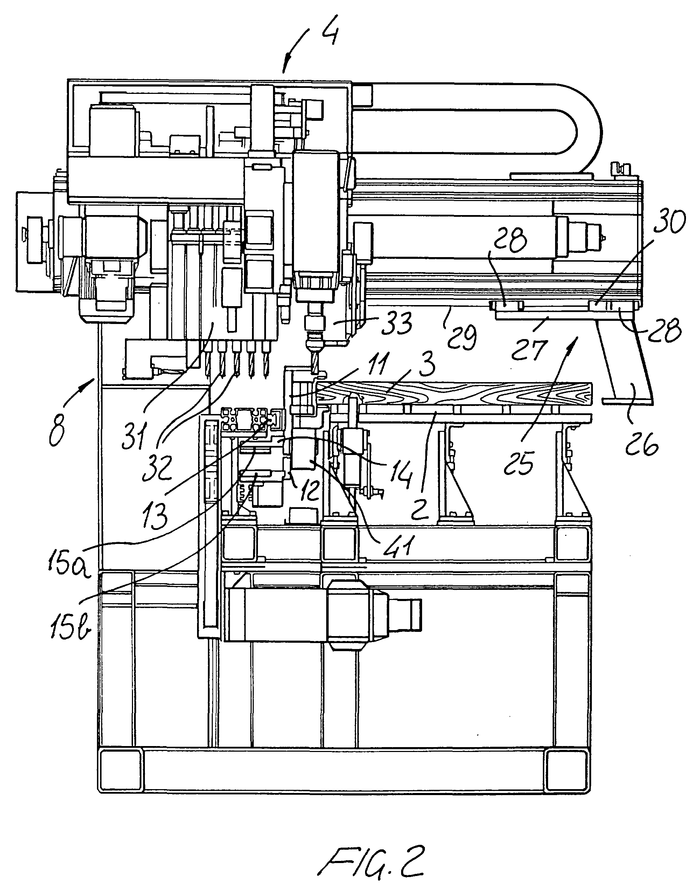

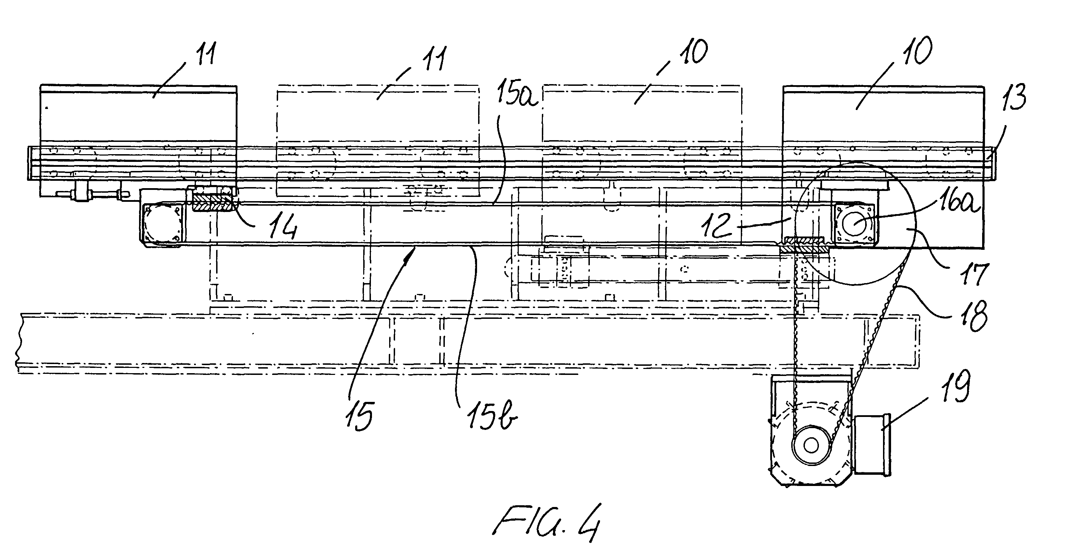

In order to cause the carriages 12 and 24 to be driven in opposite driving directions, it is possible to use, as shown in figures 1 to 4, a toothed belt 15, having a closed loop arrangement, and entrained on two pulleys 16a and 16b the axes of which are arranged transversely of said driving direction 6 thereby the two top 15a and bottom 15b arms of the toothed belt 15 will be parallel to said driving direction 6.

The gripper 10 supporting carriage 12 is connected to a portion of the bottom leg or arm 15b of the toothed belt 15, whereas the gripper 11 supporting carriage 14 is fixed to a portion of the top or upper leg 15a of the toothed belt 15.

The pulley 16a, as shown, is fixed coaxially to a further pulley 17 which is in turn coupled, by means of a belt 18, to the output shaft of an electric driving motor 19, which is preferably constituted by a step by step electric motor, or by a DC current electric motor.

Alternately, as clearly shown in figure 6, instead of using a toothed belt 15, it will be also possible to use a circulating ball screw 20, having the axis 20a arranged parallel to said driving direction 6 and comprising two threaded portions 21a and 21b having mutually opposite threads.

The carriage 12 is provided with a nut screw engaging with the threaded portion 21b, whereas the carriage 14 is provided with a nut screw engaging with the threaded portion 21a thereby, by operating the above mentioned circulating ball screw 20 with a rotary motion about the axis thereof, in a direction or in the opposite direction, the carriages 12 and 14 will be caused to be displaced, in mutually opposite directions, along the circulating ball screw 20.

A further modified embodiment of the carriage 12 and 14 driving means is shown in figure 7.

In this modified embodiment, are provided two racks 22a and 22b which are arranged parallel to said driving direction 6.

In particular, the two racks 22a and 22b are engaged, at opposite sides thereof, with a gear wheel 23 so that as the gear wheel 23 is rotatively driven, the carriages 12 and 14, fixed to the mentioned racks, will be driven in mutually opposite driving directions.

The circulating ball screw 20, as well as the mentioned gear wheel 23, can be driven, in the same manner as disclosed with reference to the toothed belt 15, by a step-by-step electric motor 19 coupled, for example by a coupling belt 18, to a pulley 17 respectively rigid with said circulating ball screw 20 and gear wheel 23.

The panel feeding device according to the present invention comprises moreover an approaching device, generally indicated by the reference number 25, which is mounted on the top of the panel supporting surface 2 and which can be controllably driven transversely of the mentioned driving direction 6.

More specifically, the approaching device 25 is provided with an arm 26 designed for contacting a side edge of the panel 3 being processed and which is connected to a supporting frame 27, including pads 28 slidably driven in guides 29 rigid with the bearing frame of the manufacturing machine and perpendicular to the mentioned driving direction 6.

The supporting frame 25 is moreover provided with an expanding pneumatic locking device 30 which can be driven so as to cause the approaching device 25 to stop at a set position along the guides 29.

In particular, the pneumatic locking device 30 can comprise, for example, a sleeve element rigid with the supporting frame 27, and slidably coupled with the mentioned guides 29.

The sleeve 30 can be inwardly expanded, under a pneumatic pressure applied to said sleeve in order to cause it to stop, and, accordingly, to cause the supporting frame 27 to stop on said guides 29.

The manufacturing machine 4 can also be provided, in its working station 8, in a per se known manner, with an operating head 31, including a plurality of spindles, each supporting a machining tool 32, for example for drilling the panel.

In the mentioned working station 8 it is also possible to provide milling units 33 as well as a circular blade 34 having a horizontal axis.

In this connection it should be pointed out that the processing station 8 has been illustrated exclusively by a merely indicative example and it can be also provided with further tools, depending on the contingent requirements.

The above disclosed panel feeding device according to the present invention operates as follows.

The panel 3 is arranged on the panel supporting surface 2 between the two arms of the gripper 10 arranged on the portion 7 of the panel supporting surface, upstream of the working or processing station 8.

With the thus arranged panel 3, the gripper 10 is engaged with the top face and bottom face of the panel 3, and is actuated the step-by-step electric motor 19 so as to cause the gripper 10 to be driven, together with the panel 3 engaged thereby, along the mentioned driving direction 6, i.e. in the direction of the working station 8.

Because the displacement of the gripper 10 along the mentioned driving direction 6, the gripper 11 will be displaced in an opposite direction, thereby approaching the gripper 10.

In particular, the gripper 11 will be arranged at such a position as not to interfere against the panel being processed 3 entrained by the gripper 10.

Thus, the panel 3 is properly arranged in the working or processing station 8 and can be processed by the processing tools provided in this working station 8.

Then, the gripper 10 is disengaged from the panel 3 and, simultaneously, the gripper 11 is engaged with said panel 3.

Then, the step by step electric motor 19 will be operated again, with an opposite rotary direction, so as to cause the panel 3, engaged by the gripper 11, to be displaced from the portion 7 to the portion 9 and moved away from the working station 8.

With the displacement of the gripper 11, the gripper 10 will be also driven in an opposite direction, so as to be recovered to its starting position in order to engage a subsequent panel 3 to be processed.

From the above disclosure and as shown, it should be apparent that the invention fully achieves the intended aim and objects.

In particular, the fact is to be pointed out that a panel feeding device has been provided which is specifically adapted to feed panels in multifunctional processing machine with a very high precision and with such a speed to allow to fully exploit the yield capabilities of the machine.

Since the subject device is provided with grippers specifically designed for firmly holding the panels being processed, during the several processing steps, it is possible to obviate any tedious and long time adjusting and calibrating operations as necessary for adjusting prior gripping devices as included in prior panel feeding devices.

While the invention has been disclosed and illustrated with reference to a preferred embodiment thereof, it should be apparent that the disclosed embodiment is susceptible to several modifications and variations all of which will come within the scope of the invention.

In practicing the invention, the used materials, as well as the contingent size and shapes can be any, depending on requirements.

## Claims

1. A device (1) for stepwise feeding panels in particular for multiple-machining operation manufacturing machines, comprising a horizontal supporting surface (12) for a panel (3) to be processed and a driving device therefor, including a pair of gripping means (10,11) which can be controllably engaged with said panel (3) arranged on said supporting surface (2), said gripping means (10,11) being adapted to be controllably reciprocated along a driving direction (6) thereof, and by mutually coordinated displacements, in order to cause said panel to be fed step per step along said driving direction, **characterized in that** said gripping means (10,11) comprising a pair of self-centering grippers (10,11), controllably engageable with and disengageable from a top face and bottom face of said panel (3) supported by said supporting surface (2).

2. A device according to Claim 1, **characterized in that** each said gripper (10,11) is mounted on a slidable carriage (12,14) which can slide along a guide (13) parallel to the driving direction (6), driving means being moreover provided for driving said carriages (12,14) along said guide (13) with opposite driving directions.

3. A device according to Claims 1 and 2, **characterized in that** said grippers (10,11) can be alternately engaged with said panel (3).

4. A device according to Claims 1 to 3, **characterized in that** said driving means comprises a toothed belt (15) entrained on two pulleys (16a,16b), having axes arranged perpendicular to said driving direction (6), one (12) of said two carriages (12,14) being coupled to a first leg (15b) of said toothed belt (15) and said other carriage (14) being coupled to an opposite leg (15a) of said toothed belt (15), so as to drive the two carriages (12,14) toward one another or away from one another, along said driving direction (6), as said toothed belt (15) is driven.

5. A device according to one or more of the preceding claims, **characterized in that** said driving means comprise a pair of racks (22a,22b) arranged parallel to said driving direction (6) and engaging, on opposite sides thereof, with a gear wheel (23), one (12) of said two carriages being coupled to one of said racks (22a) and the other (14) of said carriages being coupled to the other (22b) of said racks (22a,22b), so as to allow said carriages (12,14) to be mutually displaced toward one another or away from one another, along said driving direction (6), as said gear wheel is driven.

6. A device according to one or more of the preceding claims, **characterized in that** said driving means comprise a circulating ball screw (20) having an axis (20c) thereof parallel to said driving direction (6), and that said circulating ball screw (20) is provided with two screw portions (21a.21b) with mutually opposite threads, one (12) of said two carriages (12,14) including a nut screw engaging with one (12) of said two screw portions and the other (14) carriage including a further nut screw engaging with the other (21a) of said two threaded portions, for causing said carriages (12,14) to be mutually driven towards one another or away from one another, along said driving direction (6), as said screw (20) is driven.

7. A device according to one or more of the preceding claims, **characterized in that** said panel (3) supporting surface (2) comprises adjoining chain elements (5) parallel to said driving direction (6), said chain elements (5) supporting a plurality of rollers (40) defining a sliding supporting surface for said panel(3).

8. A device according to one or more of the preceding claims, **characterized in that** said device comprises moreover an approaching device (25), which is mounted on the top of said panel supporting surface (2) and can be controllably driven transversely of said driving direction (6).

9. A device according to Claim 9, **characterized in that** said approaching device (25) is slidably mounted on horizontal guides (29) perpendicular to said driving direction (6), said approaching device (25) being provided with a controllably driven pneumatic locking device.

## Patentansprüche

1. Vorrichtung (1) zum schrittweisen Vorschub von Platten, insbesondere für Mehrfachbearbeitungs-Herstellungsmaschinen, mit einer horizontalen Trägerfläche (2) für eine zu bearbeitende Platte (3) und einer dafür vorgesehenen Antriebsvorrichtung, einschließlich eines Paares von Greifmitteln (10, 11), die steuerbar mit der auf der Trägerfläche (2) angeordneten Platte (3) in Eingriff bringbar sind, wobei die Greifmittel (10,11) so angepaßt sind, daß sie steuerbar entlang einer Antriebsrichtung (6) derselben hin- und herbewegbar sind, sowie durch gegenseitig koordinierte Verlagerungen, um den schrittweisen Vorschub der Platte entlang der Antriebsrichtung zu verursachen,
**dadurch gekennzeichnet, daß**
die Greifmittel (10,11) ein Paar von selbstzentrierenden Greifern (10,11) umfassen, die steuerbar mit einer oberen Fläche und unteren Fläche der durch die Trägerfläche (2) getragenen Platte in Eingriff bringbar und außer Eingriff bringbar sind.

2. Vorrichtung nach Anspruch 1,
**dadurch gekennzeichnet, daß**
jeder Greifer (10,11) auf einem Gleitschlitten (12,14) angebracht ist, der entlang einer parallel zu der Antriebsrichtung (6) verlaufenden Führung (13) gleiten kann, wobei darüber hinaus Antriebsmittel zum Antrieb der Schlitten (12,14) entlang der Führung (13) in entgegengesetzten Antriebsrichtungen vorgesehen sind.

3. Vorrichtung nach den Ansprüchen 1 und 2,
**dadurch gekennzeichnet, daß**
die Greifer (10,11) wechselweise mit der Platte (3) in Eingriff bringbar sind.

4. Vorrichtung nach den Ansprüchen 1 bis 3,
**dadurch gekennzeichnet, daß**
das Antriebsmittel einen Zahnriemen (15) umfaßt, der auf zwei Laufrollen (16a, 16b) angetrieben wird, die senkrecht zu der Antriebsrichtung (6) angeordnete Achsen umfassen, wobei einer (12) der zwei Schlitten (12,14) mit einem ersten Schenkel (15b) des Zahnriemens (15) und der andere Schlitten (14) mit einem gegenüberliegenden Schenkel (15a) des Zahnriemens (15) verbunden ist, um die zwei Schlitten (12,14) entlang der Antriebsrichtung (6) aufeinander zu oder voneinander weg anzutreiben, wenn der Zahnriemen (15) angetrieben wird.

5. Vorrichtung nach einem oder mehreren der vorangegangenen Ansprüche,
**dadurch gekennzeichnet, daß**
die Antriebsmittel ein Paar von parallel zu der Antriebsrichtung (6) angeordneten Zahnstangen (22a,22b) umfassen, die an ihren gegenüberliegenden Seiten mit einem Getriebezahnrad (23) in Eingriff stehen, wobei einer (12) der zwei Schlitten mit einer der Zahnstangen (22a) und der andere (14) mit der anderen (22b) der Zahnstangen (22a, 22b) verbunden ist, um eine gegenseitige Verlagerung der Zahnstangen (12,14) entlang der Antriebsrichtung (6) aufeinander zu oder voneinander weg zu ermöglichen, wenn das Getriebezahnrad angetrieben wird.

6. Vorrichtung nach einem oder mehreren der vorangegangenen Ansprüche,
**dadurch gekennzeichnet, daß**
die Antriebsmittel eine Kugelumlaufspindel (20) umfassen, deren Achse (20c) parallel zu der Antriebsrichtung (6) verläuft, und daß die Kugelumlaufspindel (20) mit zwei Spindelabschnitten (21a, 21b) mit zueinander gegenläufigen Gewinden versehen ist, wobei einer (12) der zwei Schlitten (12,14) ein Innengewinde aufweist, das mit einem (12) der zwei Spindelabschnitte in Eingriff steht, und der andere Schlitten (14) ein weiteres Innengewinde aufweist, das mit dem anderen (21a) der zwei Gewindeabschnitte in Eingriff steht, um einen gegenseitigen Antrieb der Schlitten (12,14) entlang der Antriebsrichtung (6) aufeinander zu oder voneinander weg zu ermöglichen, wenn die Spindel (20) angetrieben wird.

7. Vorrichtung nach einem oder mehreren der vorangegangenen Ansprüche,
**dadurch gekennzeichnet, daß**
die Trägerfläche (2) der Platte (3) parallel zu der Antriebsrichtung (6) angrenzende Kettenelemente (5) aufweist, wobei die Kettenelemente (5) eine Vielzahl von Rollen (40) tragen, die eine Gleitträgerfläche für die Platte (3) definieren.

8. Vorrichtung nach einem oder mehreren der vorangegangenen Ansprüche,
**dadurch gekennzeichnet, daß**
die Vorrichtung darüber hinaus eine Näherungsvorrichtung (25) aufweist, die oben auf der Trägerfläche (2) für die Platte angebracht ist, die quer zu der Antriebsrichtung (6) antreibbar ist.

9. Vorrichtung nach Anspruch 8,
**dadurch gekennzeichnet, daß**
die Näherungsvorrichtung (25) gleitbar auf horizontalen Führungen (29) senkrecht zu der Antriebsrichtung (6) angebracht ist, wobei die Näherungsvorrichtung (25) mit einer steuerbar angetriebenen pneumatischen Arretiervorrichtung versehen ist.

## Revendications

1. Dispositif pour l'avancement pas à pas des panneaux en particulier pour des machines de fabrication pour fonctionnement à opérations multiples (« multiple-machining operation manufacturing machines »), comprenant une surface de support horizontale (12) pour qu'un panneau (3) puisse être traité et un dispositif d'actionnement sur celui-ci, incluant une paire de moyen de serrage (10, 11) qui peut être engagée de manière contrôlable avec ledit panneau (3) disposé sur ladite surface de support (2), ledit moyen de serrage (10, 11) étant adapté pour être contrôlable de manière réciproque tout au long d'une direction d'actionnement (6) de celui-ci, et par des déplacements mutuellement coordonnés, dans le but d'alimenter ledit panneau pas à pas le long de la direction d'actionnement, **caractérisé en ce que** ledit moyen de serrage (10, 11) comprenne une paire de moyen de serrage à centrage automatique (« self-centering ») (10, 11), contrôlable de manière engageable et de manière désengageable avec une surface supérieure et une surface inférieure dudit panneau (3) supportée par ladite surface de support (2).

2. Dispositif selon la revendication 1, **caractérisé en ce que** chacun des moyen de serrage (10, 11) est monté sur un support (« carriage ») glissable (12, 14) qui peut glisser le long d'un guide (13) parallèle à la direction d'actionnement (6), le moyen d'actionnement étant de plus prévu pour actionner lesdits supports (12, 14) le long dudit guide (13) avec des directions d'actionnement différentes.

3. Dispositif selon les revendications 1 et 2, **caractérisé en ce que** lesdits moyens de serrage (10, 11) peuvent être engagés de manière alternative avec ledit panneau (3).

4. Dispositif selon l'une quelconque des revendications 1 à 3, **caractérisé en ce que** ledit moyen d'actionnement comprend une courroie dentelée (15) entraînée sur deux poulies (16a, 16b), présentant des axes disposés perpendiculairement par rapport audit moyen de direction (6), l'un (12) desdits supports (12, 14) étant couplé à une première section (« leg ») (15b) de ladite courroie dentelée (15) et ledit autre support (14) étant couplé à une section opposée (15a) de ladite courroie dentelée (15), de telle manière pour actionner les deux supports (12, 14) l'un vers l'autre ou l'un loin de l'autre, le long de ladite direction d'actionnement (6), puisque la courroie dentelée (15) est actionnée.

5. Dispositif selon l'une quelconque des revendications précédentes, **caractérisé en ce que** ledit moyen d'actionnement comprend une paire de rails (22a, 22b) disposée de manière parallèle par rapport à ladite direction d'actionnement (6) et engageant, sur les côtés opposés de celui-ci, avec un engrenage (23), l'un (12) desdits deux supports étant couplés à l'un desdits rails (22a) et l'autre (14) desdits supports étant couplés à l'autre (22b) desdits rails (22a, 22b), de manière à permettre audits supports (12, 14) d'être mutuellement déplacés l'un vers l'autre ou l'un loin de l'autre, le long de ladite direction d'actionnement (6), puisque ledit engrenage est actionné.

6. Dispositif selon l'une quelconque des revendications précédentes, **caractérisé en ce que** ledit moyen d'actionnement comprend une vis sans fin («circulating bail screw») (20) présentant un axe (20c) parallèle à ladite direction d'actionnement (6), et **en ce que** ladite vis sans fin est munie de deux ensembles de vis («screw portions») (21a, 21b) présentant des filetages mutuels opposés, l'un (12) desdits deux supports (12, 14) incluant un écrou engagé avec l'un (12) desdits ensemble de vis et l'autre support (14) incluant un écrou supplémentaire engagé avec l'autre (21a) desdits ensembles filetés pour que lesdits supports (12, 14) soient actionnés mutuellement l'un vers l'autre ou l'un loin de l'autre, le long de ladite direction d'actionnement (6), puisque ladite vis (20) est actionnée.

7. Dispositif selon l'une quelconque des revendications précédentes, **caractérisé en ce que** ladite surface (2) supportant le panneau (3) comprend des éléments de chaînes (5) parallèles à ladite direction d'actionnement (6), lesdits éléments de chaînes (5) supportant plusieurs cylindres (40) définissant une surface de support glissable pour ledit panneau (3).

8. Dispositif selon l'une quelconque des revendications précédentes, **caractérisé en ce que** ledit dispositif comprend de plus un dispositif d'approche (25), qui est monté sur le sommet de ladite surface (2) supportant le panneau et peut être actionné de manière contrôlable transversalement par rapport à ladite direction d'actionnement (6).

9. Dispositif selon l'une quelconque des revendications précédentes, **caractérisé en ce que** ledit dispositif d'approche (25) est monté de manière glissable sur les guides horizontaux (29) perpendiculairement à ladite direction d'actionnement (6), ledit dispositif d'approche (25) étant muni d'un dispositif de bloquage pneumatique actionné de manière contrôlable.
